# EUROPEAN PATENT APPLICATION

(11) **EP 1 575 271 A1**
(43) Date of publication of application: **14.09.2005**
(21) Application number: 05101477.7
(22) Date of filing: 25.02.2005
(51) Int. Cl.: H04N 5/225

(54) **A camera apparatus having a flash**

(30) Priority: 10.03.2004 KR 2004016193
(71) Applicant: SAMSUNG ELECTRONICS CO., LTD., Kyungki-do (KR)
(72) Inventor: LEE, Chang-hee, Gyeonggi-do (KR)
(74) Representative: Geary, Stuart Lloyd

(57) **Abstract**

An image photographing apparatus has a first image photographing device unit and a second image photographing device unit. The image photographing apparatus also has a function of a camcorder provided by the first image photographing device unit, and a function of a digital camera provided by the second image photographing device unit, and wherein a portion of the first and second image photographing device units is protruded at a front of the main body of the apparatus. A fixed or popup flash can be further provided and is mounted to an upper side or a flank side of the main body to avoid the shading of the light by the first image photographing device unit.

## Description

The present invention relates to a camera apparatus, comprising a body, a camcorder element and a still camera element.

A digital camera converts an image projected through a lens into a digital signal which is stored on a recording media, such as a hard disk or a memory card. As the digital camera stores the captured image as a digital signal, this is convenient for editing on a personal computer (PC). Such digital cameras are primarily used for photographing still images mainly because the storage limits of the recording media is low. The digital camera also can also capture moving images. However, moving images can not be captured for a long period due to the limited storage capacity of the recording media. To overcome these drawbacks of the digital camera, a recording and/or playback apparatus, such as a camcorder, is becoming increasingly popular. The camcorder is capable of recording and playing back images and sounds of a subject to and from a recording media such as a magnetic tape.

The camcorder usually uses a magnetic tape for the recording media. The images are stored using a deck in which the tape is located. The camcorder, as opposed to the digital camera, is more suited to capturing moving image for greater periods such as of an hour or more. Camcorders also have the function of capturing still images. However, the quality of the captured image is less compared with the digital camera. Thus, the camcorder is mainly used for capturing moving images.

In order to use the functions of both the digital camera and the camcorder, both products had to be purchased separately. Accordingly, this is more expensive to the consumer. Furthermore, because a user is required to carry both of the products, this is also inconvenient.

Accordingly, a need exists for a multifunction photographing device so that a user can selectively use a digital camera function and a camcorder function.

The present invention has been provided to address the above-mentioned and other problems related to the prior art. An object of the present invention is to provide a camera apparatus having functions of both a digital camera and a camcorder.

The present invention relates to a camera apparatus, comprising a body, a camcorder element and a still camera element.

A camera apparatus according to the present invention is characterised by flash means mounted on the body and being arranged to operate in conjunction with said still camera.

Additional optional and preferred features are set forth in claims 2 and 3 appended hereto.

An embodiment of the present invention will now be described, by way of example only, and with reference to the accompanying drawings, in which:
Figure 1 is a perspective view of an image photographing apparatus having a fixed flash unit according to an embodiment of the present invention;
Figure 2 is a perspective view of an image photographing apparatus having a popup flash unit on an upper side of the main body according to an embodiment of the present invention; and
Figure 3 is a perspective view of an image photographing apparatus having a popup flash unit at a flank side of the main body according to an embodiment of the present invention.

Throughout the drawings, like reference numerals will be understood to refer to like parts, components and structures. Well-known functions or constructions are not described in detail for brevity.

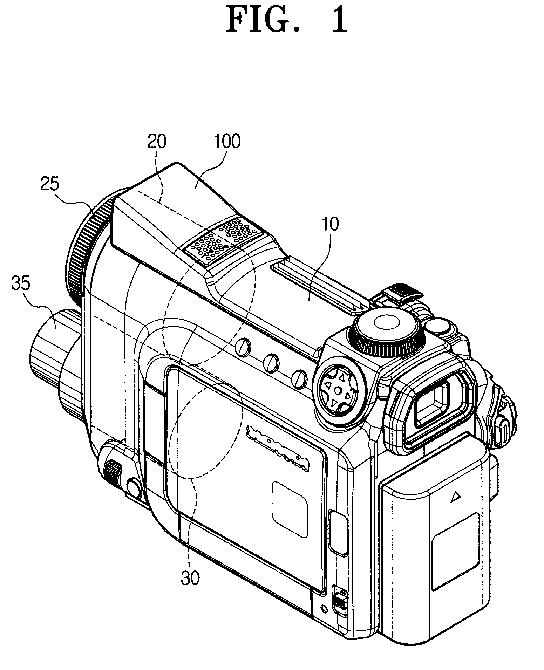

Referring to Figure 1, an image photographing apparatus (or camera apparatus) according to an embodiment of the present invention comprises a main body 10, a first image photographing device unit 20, a first image photographing device lens part 25, a second image photographing device unit 30, a second image photographing device lens part 35 and a fixed flash 100.

The main body 10 forms the exterior of the camera apparatus and has a recording media (not shown) stored therein to record or playback a captured image. The main body 10 is usually made of plastic or metal.

The first image photographing device unit 20 operates primarily for capturing moving images. A camcorder comprises the first image photographing device unit 20. A portion of the first image photographing device unit 20 protrudes from the front of the main body 10, while the remainder of the first image photographing device unit 20 is located within the main body 10. The first image photographing device unit 20 is further configured and located on an upper part of the front of the main body 10 as shown in Figure 1.

The first image photographing device lens part 25 captures moving images and is configured and located towards the front part of the first image photographing device unit 20 and protrudes from the exterior of the main body 10.

The second image photographing device unit 30 is mounted on the main body 10 and captures still images. A digital camera comprise the second image photographing device unit 30. A portion of the second image photographing device unit 30 protrudes from the exterior of the main body 10, while the remainder of the image photographing device unit 30 is located within the main body 10. The second image photographing device unit 30 is configured and located at a lower part of the front side of the main body 10.

The second image photographing device lens part 35 is configured and located at a front part of the second image photographing device unit 30 and protrudes from the exterior of the main body 10.

The fixed flash 100 is configured and located on an upper side of the main body 10. Since the fixed flash 100 is used when a still image is photographed using the second image photographing device unit 30, the fixed flash 100 is configured and located on a front part of an upper side of the main body 10, so that an appropriate amount, and angle of light is imparted on a subject for capture by the second image photographing device unit 30. This is particularly important as the first image photographing device unit 25 may interfere with the light emitted by the fixed flash 100 thus causing unwanted shadows.

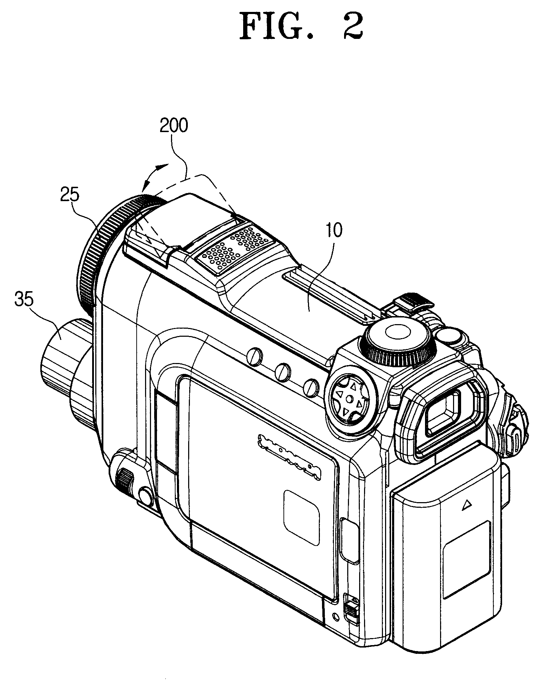

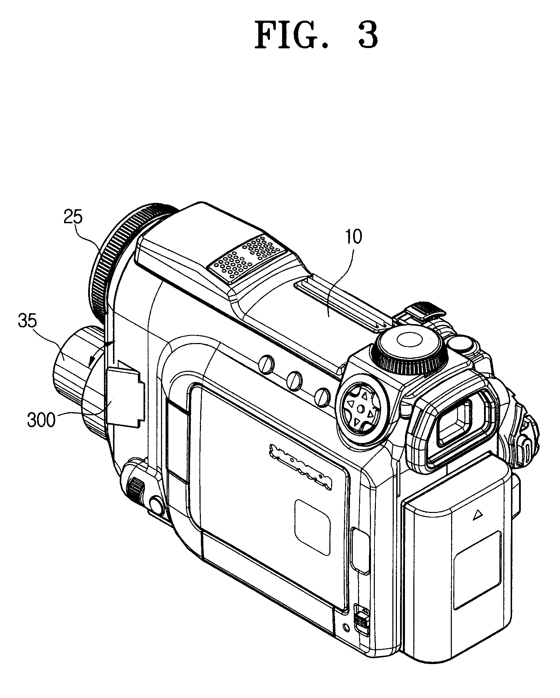

A camera apparatus shown in Figure 2 according to another embodiment of the present invention comprises a popup flash 200 instead of the fixed flash 100 of Figure 1. The popup flash 200 is configured and located at substantially the same position as the fixed flash 100 to avoid shadows which may be generated by the first image photographing device unit 20. Specifically, the light of the popup flash 200 which is provided when the popup flash appears, will be emitted at substantially the same angles as that of the fixed flash 100. Since the construction and operation of the popup flash 200 in Figure 2 and the popup flash 300 in Figure 3, which will be described in greater detail below, are known, a detailed description thereof will be omitted for conciseness.

Referring to Figure 3, the popup flash 300 is configured and located on a flank side of the main body 10. In yet another embodiment of the present invention, the popup flash 300 may be replaced with a fixed flash.

Hereinafter, the operation of the camera apparatus will be described.

The first image photographing device unit 20 comprises a first image photographing device lens part 25, a signal conversion device (not shown), and a deck (not shown), for recording and playing back photographed images. An image captured by the first image photographing device lens part 25 is converted into digital, magnetic, data in the signal conversion device (not shown), and this data is stored onto a magnetic tape (not shown) using the deck (not shown). The data stored on the magnetic tape is also played back through the deck (not shown). Since the construction and operating principles of the first image photographing device unit 20 are known, a detailed description thereof will be omitted for conciseness.

The second image photographing device unit 30 comprises the second image photographing device lens part 35, a memory device (not shown), and a signal conversion device (not shown). A still image captured by the second image photographing device lens part 35 is converted in into a digital signal in the signal conversion device (not shown), and the digital signal is stored in the memory device (not shown). The memory device may be a hard disc (not shown) or a flash memory (not shown) or the like. Since the construction and operating principles of the second image photographing device unit 30 are known, the detailed description thereof will be omitted for conciseness.

An image photographing apparatus according to an embodiment of the present invention includes functions of both a digital camera and a camcorder, and therefore, a user can select the camcorder function to capture moving images if he so desires. Furthermore, a user can select the digital camera function to capture still images when the user wishes to obtain a higher quality still image. Additionally, a user is able to purchase a single product having the functions of both a camcorder and a digital camera thus reducing expenditure.

The camera apparatus has the first image photographing device unit 20 and the second image photographing device unit 30 configured and located in parallel with one another in the front of the main body 10. This allows a user to use either the camcorder or the digital camera simply by pushing a selection button (not shown). This is done without the need to change the pose of the hand supporting the device.

If the second image photographing device unit 30 is mounted on the lower part of the front of the main body 10, it is important to match the angles of a subject and the angles of flashes 100, 200, and 300. Particularly, the first image photographing device lens part 25 protrudes from an upper part of the front of the main body 10 which means that potentially, the light from any one of flashes 100, 200, 300 could be shaded. Accordingly, for flashes 100, 200, and 300 to function correctly, the fixed flash 100 is mounted on the upper part of the main body 10 and is raised slightly above the main body 10 to avoid the first image photographing device lens part 25 casting a shadow on the subject.

According to another embodiment, the camera apparatus 10 has the popup flash 200 instead of the fixed flash 100 and is shown in Figure 2. The popup flash 200 is mounted to a front part of the upper side of the main body 10 in substantially the same position as the fixed flash 100 so as to avoid the the first image photographing device lens part 25 casting a shadow on the subject when the popup flash 200 is activated.

According to another embodiment of the present invention, the camera apparatus 10 has the popup flash 300 located on a certain area of the flank side of the main body, as is shown in Figure 3. The popup flash 300 is mounted to the flank side of the main body 10 to prevent the the first image photographing device unit 20 casting an unwanted shadow. In another embodiment, the popup flash 300 is replaced with a fixed flash.

As described above, the camera apparatus has both the first image photographing device unit and the second image photographing device unit located on a front side of a main body allowing a user to selective between the digital camera function and the camcorder function without having to change hand position. Furthermore, the flash is mounted to the front part of an upper side of the image photographing apparatus main body so that the shadow cast by the first image photographing device is minimised or avoided. A flash can also be mounted to a flank side of the main body so that the shadow cast by the first image photographing device is minimised or avoided.

## Claims

1. A camera apparatus (100), comprising a body (10), a camcorder element (20) and a still camera element (30), **characterised by** flash means (200, 300) mounted on the body (10) and being arranged to operate in conjunction with said still camera element (30).

2. A camera apparatus according to claim 1, wherein either the still camera element (30) or the camcorder element (20) comprises a lens device (25, 35) protruding from the body (10), wherein the flash means (200, 300) is arranged such that light emitted therefrom is not impinged by said lens device (25, 35).

3. A camera apparatus according to claim 2, wherein the flash means (200, 300) is located above the lens device (25, 35), and/or to the side of the lens device (25, 35).

4. An image photographing apparatus comprising:
a main body forming an external appearance of the image photographing apparatus and having a recording media for recording and reproducing an image;
a first image photographing device unit mounted to the main body for photographing a moving image;
a second image photographing device unit mounted to the main body for photographing a still image or a moving image; and
a flash for providing a light.

5. The image photographing apparatus according to claim 4, wherein the flash is mounted to a front part of an upper side of the main body to avoid shading of the light by the first image photographing device unit or the second image photographing device unit.

6. The image photographing apparatus according to claim 4, wherein the first image photographing device unit comprises:
a first image photographing device lens part protrusively configured and disposed at a front side of the main body to receive the moving image.

7. The image photographing apparatus according to claim 6, wherein the second image photographing device unit comprises:
a second image photographing device lens part protrusively configured and disposed at a front side of the main body and vertically parallel with the first image photographing device lens part to receive the still or moving image.

8. The image photographing apparatus according to claim 4, wherein the flash comprises a pop up function.

9. The image photographing apparatus according to claim 4, wherein the flash is mounted to a side of the main body to avoid shading of the light by the first image photographing device unit.

10. An image photographing apparatus comprising
a main body forming an external appearance and having a recording media for recording and reproducing an image;
a first image photographing device unit mounted to the main body for photographing a moving image;
a second image photographing device unit mounted to the main body for photographing a still image or a moving image; and
a flash for providing a light, mounted to a front of a flank side of the main body to avoid shading of the light by the first image photographing device unit or the second image photographing device unit.

11. The image photographing apparatus according to claim 10, wherein the flash comprises a pop up function.
